# EUROPEAN PATENT APPLICATION

(11) **EP 4 366 366 A1**
(43) Date of publication of application: **08.05.2024**
(21) Application number: 21947649.6
(22) Date of filing: 01.07.2021
(51) Int. Cl.: H04W 24/10

(54) **MEASUREMENT CONFIGURATION DETERMINATION METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: HU, Ziquan, Beijing 100085 (CN); LI, Yanhua, Beijing 100085 (CN)
(74) Representative: dompatent von Kreisler Selting Werner - Partnerschaft von Patent- und Rechtsanwälten mbB
(86) International application number: PCT/CN2021/104071
(87) International publication number: WO 2023/272698

(57) **Abstract**

Embodiments of the present disclosure provide a measurement configuration determination method and apparatus, a communication device, and a storage medium. The measurement configuration determination method performed by a user equipment (UE) comprises: according to a disconnected state which a UE is in and an extended discontinuous reception (eDRX) configuration of the UE, determining relevant information of a first eDRX cycle; and according to the relevant information, determining a measurement configuration of the UE.

## Description

### TECHNICAL FIELD

The disclosure relates to, but is not limited to the field of wireless communication technologies, and more particularly, to a method and an apparatus for determining a measurement configuration, a communication device, and a storage medium.

### BACKGROUND

An extended discontinuous reception (eDRX) mode is an enhanced working mode for reducing power consumption of a user equipment (UE) based on a common discontinuous reception (DRX) mode.

An inactive state is introduced in the New Radio (NR). The inactive state is a state between an idle state and a connected state. Usually, the inactive state is a UE state that is visible to a radio access network (RAN) but may not be visible to a core network (CN).

Both the inactive state and the idle state belong to a non-connected state of the UE.

### SUMMARY

Embodiments of the present disclosure provide a method and an apparatus for determining a measurement configuration, a communication device, and a storage medium. A first aspect of the embodiments of the present disclosure provides a method for determining a measurement configuration. The method is performed by a user equipment (UE) and includes:
determining relevant information of a first extended discontinuous reception (eDRX) cycle based on a non-connected state of the UE and an eDRX configuration of the UE; and
determining the measurement configuration of the UE based on the relevant information.

A second aspect of the embodiments of the present disclosure provides an apparatus for determining a measurement configuration. The apparatus is executed by a UE and includes:
a first determination module, configured to determine relevant information of a first extended discontinuous reception (eDRX) cycle based on a non-connected state of the UE and an eDRX configuration of the UE; and
a second determining module, configured to determine the measurement configuration of the UE based on the relevant information.

A third aspect of the embodiments of the present disclosure provides a communication device, including a processor, a transceiver, a memory, and an executable program stored on the memory and executable by the processor. When the processor executes the executable program, the aforementioned method for determining a measurement configuration provided in the first aspect is implemented.

A fourth aspect of the embodiments of the present disclosure provides a computer storage medium having an executable program stored thereon. After the executable program is executed by a processor, the aforementioned method for determining a measurement configuration provided in the first aspect is implemented.

In the technical solution provided by the embodiments of the present disclosure, the UE obtains a measurement configuration for determining measurement performed by the UE on a cellular mobile communication system according to its own non-connected state and the eDRX configuration of the UE. The measurement configuration determined in this way is adaptable to both the UE's state and an execution condition of the entered eDRX mode, which may achieve a good balance between meeting a measurement requirement of the measurement and further saving power consumption of the UE.

It should be understood that, both the foregoing general description and the following detailed description are exemplary and explanatory only, and do not limit the scope of the disclosure.

### BRIEF DESCRIPTION OF THE DRAWINGS

The accompanying drawings, which are incorporated in and constitute a part of the specification, illustrate embodiments consistent with the present invention and serve to explain principles of the embodiments of the present disclosure together with the specification.
Fig. 1 is a schematic diagram illustrating a wireless communication system according to an embodiment;
Fig. 2 is a schematic diagram illustrating a timing sequence of eDRX function execution according to an embodiment;
Fig. 3 is an interactive schematic diagram illustrating a core network configuring an idle state eDRX function according to an embodiment;
Fig. 4 is a flowchart illustrating determination of a radio resource management (RRM) measurement configuration according to an embodiment;
Fig. 5 is a flowchart illustrating a method for determining an RRM measurement configuration according to an embodiment;
FIG. 6 is a block diagram of an apparatus for determining an RRM measurement configuration according to an embodiment;
Fig. 7 is a block diagram of a UE according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

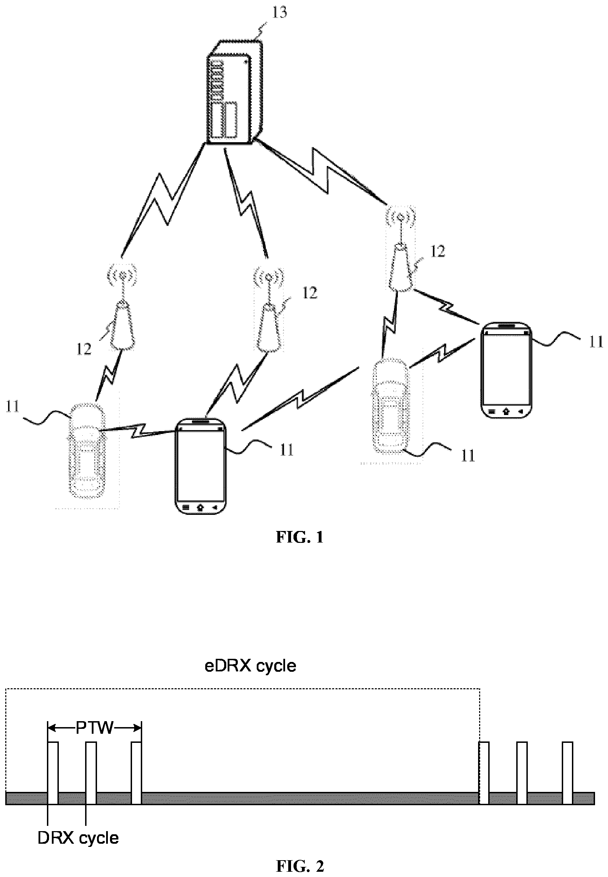

Please refer to FIG. 1, FIG. 1 is a schematic diagram illustrating a wireless communication system according to an embodiment of the disclosure. As illustrated in FIG. 1, the wireless communication system is a communication system based on a cellular mobile communication technology. The wireless communication system may include several UEs 11 and several access devices 12.

The UE 11 may refer to a device that provides voice and/or data connectivity to a user. The UE 11 may communicate with one or more core networks via a radio access network (RAN). The UE 11 may be an internet of things UE, for example, a sensor device, a mobile phone (or referred to as a "cellular" phone) and a computer having an internet of things UE, for example, may be a fixed, portable, compact, handheld, computer built-in or vehicle-mounted apparatus, for example, a station (STA), a subscriber unit, a subscriber station, a mobile station, a mobile, a remote station, an access point, a remote terminal, an access terminal, a user terminal, a user agent, a user device or a user equipment (UE). Alternatively, the UE 11 may be a device of an unmanned aerial vehicle. Alternatively, the UE 11 may be a vehicle-mounted device, for example, may be an electronic control unit with a wireless communication function, or a wireless user device externally connected to the electronic control unit. Alternatively, the UE 11 may be a roadside device, for example, may be a street lamp with the wireless communication function, a signal light or other roadside devices, and the like.

The access device 12 may be a network side device in the wireless communication system. The wireless communication system may be a 4th generation mobile communication (4G) system, also referred to as a long term evolution (LTE) system; or the wireless communication system may be a 5G system, also referred to as a new radio (NR) system or a 5G NR system. Alternatively, the wireless communication system may be a next generation system of the 5G system. An access network in a 5G system may be referred to as a new generation-radio access network (NG-RAN), or an MTC system.

The access device 12 may be an eNB adopted in the 4G system. Alternatively, the access device 12 may be a base station (gNB) with a centralized distributed architecture in the 5G system. When the access device 12 adopts the centralized distributed architecture, the access device 12 generally includes a central unit (CU) and at least two distributed units (DU). Protocol stacks of a packet data convergence protocol (PDCP) layer, a radio link control (RLC) layer and a media access control (MAC) layer are configured in the CU; a physical (PHY) layer protocol stack is configured in the DU. The specific implementation of the access device 12 is not limited in the embodiments of the disclosure.

A wireless connection may be established between the access device 12 and the UE 11 via a wireless air interface. In different implementations, the wireless air interface is a wireless air interface based on a 4G standard; or, the wireless air interface is a wireless air interface based on a 5G standard. For example, the wireless air interface is a new radio interface; or, the wireless air interface may be a wireless air interface based on a standard of next generation mobile communication network technology of the 5G.

In some embodiments, an end to end (E2E) connection can also be established between the UEs 11, for example, in vehicle to vehicle (V2V) communication, vehicle to infrastructure (V2I) communication, vehicle to pedestrian (V2P) communication and the like in vehicle to everything (V2X) communication.

In some embodiments, the above wireless communication system may further include a network management device 13.

The several access device 12 are respectively connected to the network management device 13. The network management device 13 may be a core network device in the wireless communication system. For example, the network management device 13 may be a mobility management entity (MME) in an evolved packet core network (EPC). Alternatively, the network management device may be another core network device, such as a serving gateway (SGW), a public data network gateway (PGW), a policy and charging rule function (PCRF) or a home subscriber server (HSS). The implementation form of the network management device 13 is not limited in embodiments of the disclosure.

If the UE enables an eDRX function, it will enter an eDRX mode. The UE in the eDRX mode has the following characteristics:
the UE is reachable at any time, but a reachability delay is relatively large, and the delay depends on an eDRX cycle configuration.

In this way, the UE with the enabled eDRX function achieves a maximum balance between power consumption of the UE and timeliness of data transmission.

The eDRX function has one or more of the following eDRX parameters:
a starting time domain position of a paging time window (PTW);
a length of the PTW;
an eDRX cycle, which can be represented by T_{eDRX, H}.

FIG. 2 is a sequence diagram after the UE enables the eDRX function.

Referring to FIG. 2, there is a PTW in one eDRX cycle and the PTW includes one or more DRX cycles.

A duration of the DRX cycle may be much shorter than a duration of the eDRX cycle. Exemplarily, when the eDRX cycle is longer than 10.24s, the eDRX cycle may include a PTW composed of one or more DRX cycles as shown in FIG. 2.

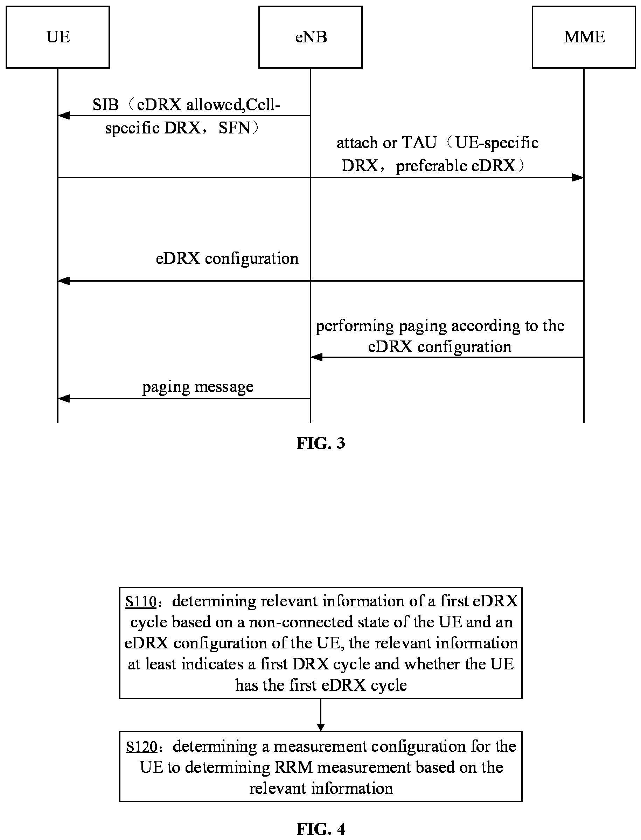

FIG. 3 shows that the UE and the core network exchange one of eDRX parameters for the eDRX function.

The method for exchanging eDRX parameters between the UE and the core network shown in FIG. 3 may include the followings.

An eNB sends an indication of allowing the eDRX function, a cell-specific indication (Cell-specific DRX) and a hyper system frame number (SFN) to the UE through a system information block (SIB).

The UE sends a UE-specific DRX parameter (UE-specific DRX) and/or a preferable DRX parameter (preferable eDRX) in an attach request or a tracking area update (TAU) request.

After a mobility management entity (MME) receives the above attach request or TAU request, it sends an eDRX configuration to the UE. The eDRX configuration carries the aforementioned one or more eDRX parameters.

The MME performs paging according to the eDRX configuration.

After receiving a CN paging message sent by the MME, the eNB forwards the CN paging message to the UE.

The eDRX parameters sent by the core network are transparently transmitted to the UE through the base station (for example, an evolved base station (eNB) or a next-generation base station (gNB)). For example, The MME of the core network sends the eDRX parameters of the eDRX function to the UE through the eNB.

An RRC idle state, referred to as an idle state, is a low power consumption state of the UE that is known to the core network.

An RRC inactive state, referred to as an inactive state, is a low power consumption state of the UE that is transparent to the core network. But the inactive state is visible to the access network.

If the UE enters the inactive state, the UE needs to receive a paging message sent by the CN (i.e., the CN paging message), and also needs to receive a paging message sent by the access network (RAN), that is, the RAN paging message.

As shown in FIG. 4, an embodiment of the present disclosure provides a method for determining a measurement configuration. The method is performed by a UE, and the method includes the following steps.

S 110, relevant information of a first eDRX cycle is determined based on a non-connected state of the UE and an eDRX configuration of the UE.

S 120, a measurement configuration of the UE is determined based on the relevant information.

The embodiment of the present disclosure provides the method for determining a measurement configuration performed by the UE. The measurement configuration is mainly used as a measurement configuration of high-priority frequency measurement of the UE and/or a measurement configuration of one or more carrier groups of the UE supporting increased number of carriers for monitoring (Incmon). One carrier group includes at least one carrier.

The non-connected state here includes: the idle state and/or the inactive state.

The UE includes but is not limited to an NR UE. The NR UE may be a UE using an NR carrier.

It should be noted that in the disclosure, the term "first" in the first eDRX cycle has no specific meaning, and the first eDRX cycle refers specifically to an eDRX cycle used to determine an RRM measurement.

The relevant information indicates at least one of the following:
indication information, indicating whether the UE has the first eDRX cycle;
first eDRX cycle information; for example, if a duration value indicated by the first eDRX cycle information is 0, it may be considered that the UE does not have the first eDRX cycle, and if the duration value indicated by the first eDRX cycle information is a positive number greater than 0, it may be considered that the UE has the first eDRX cycle.

As another example, the first eDRX cycle information may include two bits. One bit corresponds to an idle state eDRX cycle of the UE, and the other bit corresponds to an inactive state eDRX cycle of the UE. The first eDRX cycle can be one of the idle state eDRX cycle and the inactive state eDRX cycle of the UE, and the corresponding bit values of the two bits are configured as preset values to indicate that the first eDRX cycle of the current UE is equal to the idle state eDRX cycle or the inactive state eDRX cycle corresponding to the bits having the bit values configured as the preset values. If the bit values of the two bits have only one bit value configured as the preset value, and neither of the bit values of the two bits is the preset value, it can be considered that the current UE does not have the first eDRX cycle.

Of course, the above is only an illustration of the information content and information description manner of the relevant information, and the specific implementation is not limited thereto.

In a word, in the embodiments of the present disclosure, the UE obtains a measurement configuration for determining measurement performed by the UE on a cellular mobile communication system according to its own non-connected state and the eDRX configuration of the UE. The measurement configuration determined in this way is adaptable to both the UE's state and an execution condition of the entered eDRX mode, which may achieve a good balance between meeting a measurement requirement of the measurement and further saving power consumption of the UE.

In an embodiment, the measurement configuration includes at least one of the following:
a measurement time interval for the UE to measure a high-priority frequency, in which the high-priority frequency is a frequency with a priority higher than a frequency of a serving cell of the UE;
a measurement duration for the UE to perform a cell selection;
a measurement parameter for radio resource management (RRM) measurement of a specified type of UE, in which carriers to be measured of the specified type of UE include: a first carrier group and a second carrier group, the first carrier group is a carrier group for which the specified type of UE has a carrier measurement requirement the same as a non-specified type of UE, and the second performance carrier group is a carrier group to be measured for which a measurement requirement is lower than the measurement requirement for the first carrier group.

For example, the serving cell of the UE is cell A, cell B is a neighboring cell of cell A, and a frequency priority of cell B is higher than that of cell A, then a frequency of cell B is a high-priority frequency of the UE.

In the embodiment of the present disclosure, the measurement configuration determined in S 120 is the measurement time interval for the UE to measure the high-priority frequency.

The UE has a certain degree of mobility, which may cause the UE to move and switch between different cells. In the embodiment of the present disclosure, the measurement configuration may be the measurement duration for the UE to perform cell selection.

If the UE is an Incmon UE, it may support multiple carrier groups. The specified type of UE in the embodiment includes but is not limited to the Incmon UE. The non-specified type of UE is a UE other than the specified type of UE. For example, the non-specified type of UE may be a UE with one carrier group to be measured.

The specified type of UE has two carrier groups of carriers to be specified type of UE, which are the first carrier group and the second carrier group, respectively.

The first carrier group may be referred to as a normal carrier group, and the second carrier group may be referred to as a reduced performance carrier group.

The specified type of UE measures carriers in the first carrier group using the same standard or the same strict measurement requirement as that used by the non-specified type of UE to measure carriers, so the same or similar measurement configurations can be used under the same condition. For the second carrier group with reduced performance, the UE can adopt a measurement requirement to perform relaxed measurement on the second carrier group, so that the measurement configuration of the second carrier group for the specified type of UE can set a larger measurement time interval or a lower measurement number of times.

In an embodiment, S 110 may include at least one of the following:
in response to the UE being in an idle state and configured with an idle state eDRX cycle, determining that the UE has the first eDRX cycle equal to the idle state eDRX cycle; or
in response to the UE being in an idle state and not configured with an idle state eDRX cycle, determining that the UE does not have the first eDRX cycle.

If the UE is currently in the idle state and is configured with the idle state eDRX cycle, it is considered that the UE has the first eDRX cycle and the first eDRX cycle is equal to the idle state eDRX cycle.

If the UE is in the idle state and is not configured with the idle state eDRX cycle, it can be directly determined that the UE does not have the first eDRX cycle, and the measurement configuration of the UE can be determined according to the fact that the UE does not have the first eDRX cycle.

If the UE has the idle state eDRX cycle, and the idle state eDRX cycle is greater than a first cycle, that is, a PTW is set in the idle state eDRX cycle, then the measurement performed according to the determined measurement configuration occurs in the PTW, that is, the measurement time falls within the PTW.

Here, the first cycle may be a critical cycle for determining whether the idle state eDRX cycle has a PTW. Exemplarily, a duration of the first cycle may be 10.24S.

In some embodiments, S 110 further includes at least one of the following:
in response to the UE being in an inactive state, configured with an idle state eDRX cycle not greater than the first cycle and not configured with an inactive state eDRX cycle, determining that the UE does not have the first eDRX cycle; or
in response to the UE being in an inactive state, configured with an idle state eDRX cycle not greater than the first cycle and not configured with an inactive state eDRX cycle, determining that the UE has the first eDRX cycle equal to the idle state eDRX cycle.

If the UE is in the inactive state and is configured with the idle state eDRX cycle not greater than the first cycle, then the UE is not configured with the inactive state eDRX cycle, and in this case, it can be considered that the UE in the inactive state does not have the first eDRX cycle, or the idle state eDRX cycle is configured as the first eDRX cycle of the UE.

If the first eDRX cycle of the UE in the inactive state is its idle state eDRX cycle, and the first eDRX cycle is greater than the first cycle, then the idle state eDRX cycle has a PTW, and in this case, the measurement time of the UE may fall within state within the PTW of its idle state eDRX cycle, otherwise the measurement time of the UE may fall within the entire time domain.

In some embodiments, S 110 may further include at least one of the following:
in response to the UE being in an inactive state, configured with an idle state eDRX cycle not greater than the first cycle and an inactive state eDRX cycle not greater than the first cycle, determining that the UE has the first eDRX cycle equal to the inactive state eDRX cycle; or
in response to the UE being in an inactive state, configured with an idle state eDRX cycle not greater than the first cycle and an inactive state eDRX cycle not greater than the first cycle, determining that the UE has the first eDRX cycle equal to a smaller one of the inactive state eDRX cycle and a non-idle state eDRX cycle.

If the UE is in the inactive state and is configured with the idle state eDRX cycle not greater than the first cycle and the inactive state eDRX cycle not greater than the first cycle, the UE has the first eDRX cycle. In this case, the first eDRX cycle of the UE may be the inactive state eDRX cycle or the idle state eDRX cycle corresponding to the non-connected state of the UE.

Since neither the idle state eDRX cycle nor the inactive state eDRX cycle of the UE is greater than the first cycle, the measurement time of the UE can be distributed in the entire time domain in this case.

In an embodiment, S 110 may further include at least one of the following:
in response to the UE being in an inactive state, configured with an idle state eDRX cycle greater than the first cycle and not configured with an inactive state eDRX cycle, determining that the UE has the first eDRX cycle equal to the idle state eDRX cycle; or
in response to the UE being in an inactive state, configured with an idle state eDRX cycle greater than the first cycle and not configured with an inactive state eDRX cycle, determining that the UE does not have the eDRX cycle.

In this case, the UE is in the inactive state, and the UE is configured with the idle state eDRX cycle greater than the first cycle and is not configured with the inactive state eDRX cycle. In this case, since the UE is in the inactive state, it can be considered that the UE does not have the first eDRX cycle, or its idle state eDRX cycle can be determined as the first eDRX cycle of the UE.

Since the idle state eDRX cycle of the UE is greater than the first cycle, the idle state eDRX cycle of the UE has a PTW, and the measurement time of the UE may fall within the PTW.

In an embodiment, S 110 may further include at least one of the following:
in response to the UE being in an inactive state, configured with an idle state eDRX cycle greater than the first cycle and configured with an inactive state eDRX cycle greater than the first cycle, determining that the UE has the first eDRX cycle equal to the idle state eDRX cycle; or
in response to the UE being in an inactive state, configured with an idle state eDRX cycle greater than the first cycle and configured with an inactive state eDRX cycle greater than the first cycle, determining that the UE has the first eDRX cycle equal to the inactive state eDRX cycle; or
in response to the UE being in an inactive state, configured with an idle state eDRX cycle greater than the first cycle and configured with an inactive state eDRX cycle greater than the first cycle, determining that the UE has the first eDRX cycle equal to a smaller one of the idle state eDRX cycle and the inactive state eDRX cycle.

If the UE has both the idle state eDRX cycle and the inactive state eDRX cycle greater than the first cycle, it may be determined that the UE has the first eDRX cycle equal to the inactive state eDRX cycle according to the fact that the UE is in the inactive state. Of course, it can also be determined that the UE has the first eDRX cycle equal to the idle state eDRX cycle, or the first eDRX cycle equal to the smaller one of the inactive state eDRX cycle and the idle state eDRX cycle.

In this case, the measurement time of the UE may fall within the PTW of the eDRX cycle corresponding to the first eDRX cycle.

Exemplarily, if the first eDRX cycle of the UE is equal to the idle state eDRX cycle of the UE, the measurement time of the UE falls within the PTW of the idle state eDRX cycle of the UE; if the first eDRX cycle of the UE is equal to the inactive state eDRX cycle, the measurement time of the UE falls within the PTW of the inactive state eDRX cycle of the UE. If the first eDRX cycle of the UE is the smaller one of the idle state eDRX cycle and the inactive state eDRX cycle, the measurement time of the UE falls within the PTW of the smaller one of the idle state eDRX cycle and the inactive state eDRX cycle.

That is, in response to the UE being in the inactive state, configured with the idle state eDRX cycle greater than the first cycle and configured with the inactive state eDRX cycle greater than the first cycle, the UE has the first eDRX cycle equal to the idle state eDRX cycle, the measurement time of the UE falls within the PTW of the idle state eDRX cycle;
or,
in response to the UE being in the inactive state, configured with the idle state eDRX cycle greater than the first cycle and configured with the inactive state eDRX cycle greater than the first cycle, it is determined that the UE has the first eDRX cycle equal to the inactive state eDRX cycle, the measurement time of the UE falls within the PTW of the inactive state eDRX cycle;
   or,
in response to the UE being in the inactive state, configured with the idle state eDRX cycle greater than the first cycle and configured with the inactive state eDRX cycle greater than the first cycle, the UE has the first eDRX cycle equal to the smaller one of the idle state eDRX cycle and the inactive state eDRX cycle, the measurement time of the UE falls within the smaller one of the PTW of the idle state eDRX cycle and the PTW of the inactive state eDRX cycle.

In one embodiment, S 120 may include:
determining, based on the relevant information indicating that the UE does not have the first eDRX cycle, the measurement time interval of the high-priority frequency is M*Nlayers,
   or,
determining, based on the relevant information indicating that the UE has the first eDRX cycle, the measurement time interval of the high-priority frequency is a larger one of M*Nlayers and at least one first eDRX cycle.

M is any positive integer, and Nlayers is a total number of high-priority frequencies.

M may be any preset positive integer, for example, M may be 60.

If the UE has the first eDRX cycle, it is determined that the measurement time interval of the high-priority frequency is M*Nlayers, and if the UE does not have the first eDRX cycle, the UE takes the larger one of M*Nlayers and the first eDRX cycle as the measurement interval for measuring the high-priority frequency.

The UE will receive a frequency configuration table sent by the base station, and according to the frequency configuration table, the UE can determine which frequency has a priority higher than the frequency of the serving cell where the UE is currently located, so as to determine the high-priority frequency. Nlayers is the total number of high-priority of the UE. The value of Nlayers can be 0 or any positive integer.

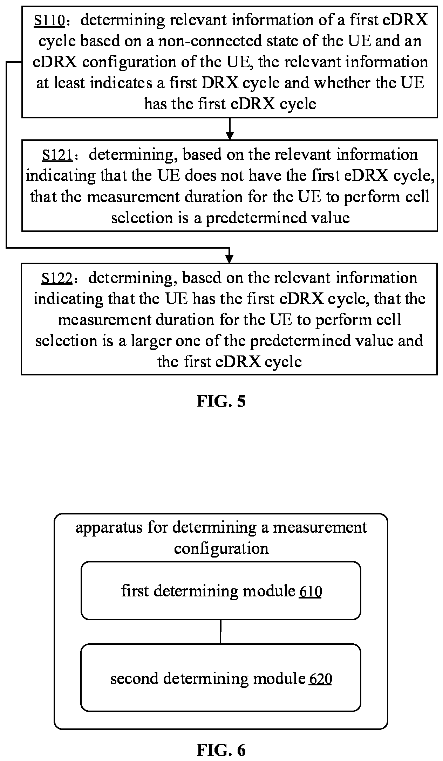

In some embodiments, as shown in FIG. 5, S 120 may include:
S121, it is determined, based on the relevant information indicating that the UE does not have the first eDRX cycle, that the measurement duration for the UE to perform cell selection is a predetermined value;
   and/or,
S 122, it is determined, based on the relevant information indicating that the UE has the first eDRX cycle, that the measurement duration for the UE to perform cell selection is a larger one of the predetermined value and the first eDRX cycle.

The predetermined value may be any preset duration value, for example, the predetermined value may be 10s, 15s, or other values.

In some embodiments, after it is determined that the UE does not have the first eDRX cycle according to the relevant information, the measurement duration of the UE when the UE performs cell selection can be 10s or the like; otherwise, the UE has the first eDRX cycle, the larger one of 10s and the first eDRX cycle is selected as the measurement duration of the UE when the UE performs cell selection.

In some embodiments, S 120 may include at least one of the following:
in response to the specified type of UE having the first eDRX cycle, determining and detecting, based on a number of carriers in the first carrier group, the measurement configuration of a neighboring cell corresponding to the carriers in the first carrier group;
in response to the specified type of UE having the first eDRX cycle not greater than a second cycle, determining, based on a number of carriers in the second carrier group and a relaxation coefficient, the measurement configuration of a neighboring cell corresponding to the carriers in the second carrier group; or
in response to the specified type of UE having the first eDRX cycle greater than a second cycle, and a signal measurement value of the serving cell of the UE meeting a preset condition, determining, based on a number of carriers in the second carrier group and a relaxation coefficient, the measurement configuration of a neighboring cell corresponding to the carriers in the second carrier group.

The relaxation coefficient is a positive integer greater than or equal to 2.

In the embodiment of the present disclosure, the specified type of UE may be the aforementioned Incmon UE. The second cycle is greater than the first cycle. For example, the second cycle may be twice the first cycle. Assuming that the first cycle is 10.24s, the second cycle may be 20.48s.

In an embodiment of the present disclosure, the measurement configuration includes, but is not limited to, one or more of a detection cycle, a measurement cycle, and an evaluation cycle. For example, each of the measurement configuration for an intra-frequency neighboring cell, the measurement configuration for an inter-frequency neighboring cell, and the measurement configuration for an inter-RAT cell may include one or more of the detection cycle, the measurement cycle, and the evaluation cycle.

The detection cycle may be used for the UE to identify and evaluate the identified neighboring cell. The measurement cycle is used to perform non-first measurement on the neighboring cell after the corresponding neighboring cell is identified. The evaluation cycle may be used to perform evaluation on the neighboring cell based on the measurement result after the neighboring cell is identified.

Generally, the detection cycle is greater than the measurement cycle and greater than the evaluation cycle, and the evaluation cycle is greater than the measurement cycle.

During the measurement cycle, the UE will detect the synchronization signal and PBCH block (SSB SSB) of the neighboring cell. PBCH is the abbreviation of Physical Broadcast Channel.

The UE may have the same or different measurement configurations for the intra-frequency neighboring cell and the inter-frequency neighboring cell.

Taking the detection cycle as an example, when the UE has the first eDRX cycle, the detection cycle for detecting the neighboring cells corresponding to carriers in the first carrier group determined according to the carrier data in the first carrier group may be a product of the number of the carriers in the first carrier group and a preset detection cycle.

If a relaxation coefficient is introduced for the second carrier group, and the relaxation coefficient is a positive number greater than 1, the detection cycle for the UE to measure carriers in the second carrier group may be a product of the number of the carriers in the second carrier group, the preset detection cycle and the relaxation coefficient.

The value of the relaxation coefficient may be any positive integer greater than 1, for example, the relaxation coefficient may be 6.

If the UE does not have the first eDRX cycle, the measurement configuration of the specified type of UE can refer to provisions of related art, for example, with reference to the method of the non-specified type of UE determining the measurement configuration of the high-priority frequency, the measurement configuration for the specified type of UE to measure the high-priority frequency can be determined.

In an embodiment, the signal measurement value includes: a reference signal received power (RSRP) or a reference signal received quality (RSPQ).

Meeting the preset condition includes:
a RSRP of the serving cell being not greater than a RSRP threshold;
   or,
a RSPQ of the serving cell being not greater than a RSRQ threshold.

The measured signal value may be a measured value obtained by the UE measuring a reference signal of the serving cell, including but not limited to RSPP and/or RSRQ.

The RSRP threshold may be 3db, 4db, 5db or the like.

When the UE is configured with an idle state eDRX cycle, in this case, the measurement interval T_{higher_priority_search} of the high-priority frequency is a concept related to the eDRX cycle. When selecting a public land mobile network (PLMN), the time T when the UE initiates cell selection is also a concept related to the eDRX cycle. But when the inactive state eDRX cycle is introduced, there is no related solution. Therefore, it is necessary to consider that RAN4 needs to introduce a new measurement requirement. After the introduction of the inactive state eDRX cycle, RAN4 needs to introduce the new measurement requirement.

For example, the determination of the eDRX cycle by the UE based on the eDRX configuration is used to regulate the measurement requirement.

If the UE in the inactive state is configured with the idle state eDRX cycle and the configured idle state eDRX cycle is not greater than 10.24s, and the inactive state eDRX cycle is not configured, for example,
the idle state eDRX cycle is equal to one of 10.24s, 5.12s, or 2.56s, and the inactive state eDRX cycle is not configured. In this case, for the eDRX cycle (i.e., the first eDRX cycle) and/or DRX cycle (i.e., the first DRX cycle) for the UE in the inactive state to determine the measurement configuration:

### Method 1:

The UE determines that the UE does not have the eDRX cycle for determining the measurement configuration.

In some embodiments, the DRX cycle for the UE to determine the measurement configuration=min{idle state eDRX cycle, RAN paging cycle}.

### Method 2:

The UE determines the first eDRX cycle, and the eDRX cycle is equal to the idle state eDRX cycle.

The idle state eDRX cycle and inactive state eDRX cycle are configured, and the configured eDRX cycles are not greater than 10.24s (in this case, there is no PTW window in the actual measurement), for example,
the idle state eDRX cycle is equal to one of 10.24s or 5.12s or 2.56s, and the inactive state eDRX cycle is equal to one of 10.24s or 5.12s or 2.56s. In this case, the UE determines the UE has the eDRX cycle for determining the measurement configuration, and the eDRX cycle = min{idle state eDRX cycle, inactive state eDRX cycle}, or the eDRX cycle is equal to the inactive state eDRX cycle.

In an embodiment, if the UE in the inactive state is configured with the idle state eDRX cycle greater than 10.24s and not configured with the inactive state eDRX cycle, that is, the UE is configured with the RAN paging cycle, then,

### Method 1:

The UE determines that the UE has the eDRX cycle for determining the measurement configuration.

The measurement time is limited to the eDRX cycle of the core network paging (CN paging), and the eDRX cycle used to determine the measurement configuration is equal to the idle state eDRX cycle.

### Method 2:

The UE determines that the UE has the eDRX cycle for determining the measurement configuration.

The RRM measurement time is not limited to the PTW of the eDRX cycle of the CN paging.

The DRX cycle is equal to min{idle state eDRX cycle, RAN paging cycle}.

If the UE in the inactive state is configured with the idle state eDRX cycle greater than 10.24s, and the idle state eDRX is configured with a PTW PTW1 and the inactive state eDRX cycle is not greater than 10.24s, the inactive state eDRX cycle is not configured with an inactive PTW.

In this case, the UE determines that the UE has the eDRX cycle for determining the measurement configuration.

In this case, other parameters of the measurement configuration of the UE may be as follows.

Mode 1: The RRM measurement time is only limited to the eDRX cycle of the CN paging.

The eDRX cycle is equal to the idle state eDRX cycle.

Method 2: The RRM measurement time is not limited to the eDRX cycle of the CN paging.

The eDRX cycle is equal to min{idle state eDRX cycle, inactive state eDRX cycle}.

If the UE in the inactive state is configured with the idle state eDRX cycle greater than 10.24s, and the inactive state eDRX cycle greater than 10.24s, then the UE is determined to have the eDRX cycle for determining the measurement configuration, and the measurement configuration of the UE can be described as follows.

Mode 1: The RRM measurement time is only limited to the eDRX cycle of the CN paging.

The eDRX cycle used to determine the measurement configuration is the idle state eDRX cycle.

Mode 2: The RRM measurement time is only limited to the eDRX cycle of the RAN paging.

The eDRX cycle used to determine the measurement configuration is the inactive state eDRX cycle

Mode 3: The RRM measurement time is not limited to the eDRX cycle of the CN paging.

The eDRX cycle used to determine the measurement configuration is min {idle state eDRX cycle, inactive state eDRX cycle}, or the eDRX cycle used to determine the measurement configuration is the inactive state eDRX cycle.

### Scenario 1: High-frequency point priority measurement interval:

As an embodiment,
for the UE in the idle state and/or the UE in the inactive state,
if the UE does not have the eDRX cycle for determining the measurement configuration, the high frequency priority measurement interval T_{higher_priority_search} is set to (60*Nlayers) seconds.

As an embodiment,
for the UE in the idle state and/or the UE in the inactive state,
if the UE has the eDRX cycle for determining the measurement configuration, the high frequency priority measurement interval T_{higher_priority_search} is set to the larger value of 60*Nlayers and an eDRX cycle for determining the measurement configuration.

### Scenario 2: When the terminal re-initiates cell selection:

As an embodiment,
for the UE in the idle state and/or the UE in the inactive state,
if the eDRX cycle is not configured for the UE, the high frequency priority measurement interval T=10s.

As an embodiment,
for the UE in the idle state and/or the UE in the inactive state,
if the UE is configured with the edrx cycle, the high frequency priority measurement interval T=MAX(10s, one eDRX cycle)

Scenario 3: Incmon Scenario: For a UE supporting the Incmon capability, the RRM measurement behavior may be affected according to the eDRX cycle used to determine the measurement configuration.

For the UE that supports the Incmon capability (that is, the specified type of UE mentioned above), when performing measurement on the inter-frequency/inter-RAT neighboring cell, the monitored carriers are divided into a normal performance group and a reduced performance group. For carriers in the normal performance group, the measurement requirement is the same as that of the UE that do not support this capability. For carriers in the reduced performance group, the measurement requirement is relaxed by 6 times compared to the measurement requirement of the UE that do not support this capability.

The normal performance group here may be the aforementioned first carrier group, and the reduced performance group here may be the aforementioned second carrier group.

Depending on the determined eDRX cycle, the RRM measurement behavior is also affected.

In the case where the eDRX cycle is not configured or the configured eDRX cycle is less than or equal to 20.48s,
for the normal performance group, if an inter-frequency carrier is detectable but not detected, the UE is required to complete detection and evaluation on the inter-frequency carrier within the time of Kcarrier,normal*Tdetect,EUTRAN_Inter; in which Kcarrier,normal is the number of carriers in the normal performance group number, and Tdetect, EUTRAN_Inter may be the aforementioned preset detection time;
   for the reduced performance group, if an inter-frequency carrier is detectable but not detected, the UE is required to complete detection and evaluation on the inter-frequency carrier within the time of 6*Kcarrier,reduced*Tdetect,EUTRAN_Inter; in which Kcarrier,reduced is the number of carriers in the reduced performance group.

In the case where the eDRX cycle used to determine the measurement configuration is greater than 20.48s,
for the normal performance group, if an inter-frequency carrier is detectable but not detected, and the signal strength or signal quality of the serving cell is less than 3dB, the UE is required to complete detection and evaluation on the inter-frequency carrier within the time of Kcarrier,normal*Tdetect,EUTRAN_Inter;
for the reduced performance group, if an inter-frequency carrier is detectable but not detected, the UE is required to complete detection and evaluation on the inter-frequency carrier within the time of 6*Kcarrier, normal*Tdetect, EUTRAN_Inter.

As shown in FIG. 6, an embodiment of the present disclosure provides an apparatus for determining a measurement configuration. The apparatus is executed by a UE, and the apparatus includes a first determining module 610 and a second determining module 620.

The first determining module 610 is configured to determine relevant information of a first eDRX cycle based on a non-connected state of the UE and an eDRX configuration of the UE.

The second determining module 620 is configured to determine the measurement configuration of the UE based on the relevant information.

In an embodiment, the first determining module 610 and the second determining module 620 may be program modules. After the program modules are executed by the processor, the program modules can realize determining relevant information of a first eDRX cycle based on a non-connected state of the UE and an eDRX configuration of the UE and determining the measurement configuration of the UE based on the relevant information.

In another embodiment, the first determining module 610 and the second determining module 620 may be hardware and software combination modules. The software and hardware combined module includes, but is not limited to, a programmable array. The programmable array includes, but is not limited to, a complex programmable array and/or a field programmable array.

In an embodiment, the measurement configuration includes at least one of the following:
a measurement time interval for the UE to measure a high-priority frequency; in which, the high-priority frequency is a frequency with a priority higher than a frequency of a serving cell of the UE;
a measurement duration for the UE to perform a cell selection;
a measurement parameter for radio resource management (RRM) measurement of a specified type of UE, in which, carriers to be measured of the specified type of UE comprise: a first carrier group and a second carrier group, the first carrier group is a carrier group for which the specified type of UE has a carrier measurement requirement the same as a non-specified type of UE, and the second performance carrier group is a carrier group to be measured for which a measurement requirement is lower than the measurement requirement for the first carrier group.

In an embodiment, the first determining module 610 is configured to perform at least one of the following:
in response to the UE being in an idle state and configured with an idle state eDRX cycle, determining that the UE has the first eDRX cycle equal to the idle state eDRX cycle; or
in response to the UE being in an idle state and not configured with an idle state eDRX cycle, determining that the UE does not have the first eDRX cycle.

In an embodiment, in response to the UE being in the idle state and configured with the idle state eDRX cycle, it is determined that the UE has the first eDRX cycle equal to the idle state eDRX cycle, the first eDRX cycle is greater than a first cycle, and a measurement time of the UE falls within a paging time window (PTW) of the idle state eDRX cycle.

In one embodiment, the first determining module 610 is configured to further include at least one of the following:
in response to the UE being in an inactive state, configured with an idle state eDRX cycle not greater than a first cycle and not configured with an inactive state eDRX cycle, determining that the UE does not have the first eDRX cycle; or
in response to the UE being in an inactive state, configured with an idle state eDRX cycle not greater than a first cycle and not configured with an inactive state eDRX cycle, determining that the UE has the first eDRX cycle equal to the idle state eDRX cycle.

In an embodiment, in response to the UE being in an inactive state, configured with an idle state eDRX cycle greater than the first cycle and not configured with an inactive state eDRX cycle, the UE has the first eDRX cycle equal to the idle state eDRX cycle, and the measurement time of the UE falls within the PTW defined by the idle state eDRX cycle.

In one embodiment, the first determining module 610 is configured to perform at least one of the following:
in response to the UE being in an inactive state, configured with an idle state eDRX cycle not greater than a first cycle and an inactive state eDRX cycle not greater than the first cycle, determining that the UE has the first eDRX cycle equal to the inactive state eDRX cycle; or
in response to the UE being in an inactive state, configured with an idle state eDRX cycle not greater than a first cycle and an inactive state eDRX cycle not greater than the first cycle, determining that the UE has the first eDRX cycle equal to a smaller one of the inactive state eDRX cycle and a non-idle state eDRX cycle.

In one embodiment, the first determining module 610 is configured to perform at least one of the following:
in response to the UE being in an inactive state, configured with an idle state eDRX cycle greater than a first cycle and not configured with an inactive state eDRX cycle, determining that the UE has the first eDRX cycle equal to the idle state eDRX cycle; or
in response to the UE being in an inactive state, configured with an idle state eDRX cycle greater than a first cycle and not configured with an inactive state eDRX cycle, determining that the UE does not have the eDRX cycle.

In an embodiment, in response to the UE being in the inactive state, configured with the idle state eDRX cycle greater than the first cycle and not configured with the inactive state eDRX cycle, the UE has the first eDRX cycle equal to the idle state eDRX cycle, a measurement time of the UE falls within a PTW defined by the idle state eDRX cycle.

In an embodiment, the first determining module 610 is configured perform at least one of the following:
in response to the UE being in an inactive state, configured with an idle state eDRX cycle greater than a first cycle and configured with an inactive state eDRX cycle not greater than the first cycle, determining that the UE has the first eDRX cycle equal to the idle state eDRX cycle;
in response to the UE being in an inactive state, configured with an idle state eDRX cycle greater than a first cycle and configured with an inactive state eDRX cycle not greater than the first cycle, determining that the UE has the first eDRX cycle equal to a smaller one of the inactive state eDRX cycle; or
in response to the UE being in an inactive state, configured with an idle state eDRX cycle greater than a first cycle and configured with an inactive state eDRX cycle greater than the first cycle, determining that the UE has the first eDRX cycle equal to the idle state eDRX cycle.

In an embodiment, in response to the UE being in the inactive state, configured with the idle state eDRX cycle greater than the first cycle and configured with the inactive state eDRX cycle not greater than the first cycle, it is determined that the UE has the first eDRX cycle equal to the idle state eDRX cycle, and a measurement time of the UE falls within a PTW of the idle state eDRX cycle.

In an embodiment, the first determining module 610 is configured to perform at least one of the following:
in response to the UE being in an inactive state, configured with an idle state eDRX cycle greater than a first cycle and configured with an inactive state eDRX cycle greater than the first cycle, determining that the UE has the first eDRX cycle equal to the idle state eDRX cycle;
in response to the UE being in an inactive state, configured with an idle state eDRX cycle greater than a first cycle and configured with an inactive state eDRX cycle greater than the first cycle, determining that the UE has the first eDRX cycle equal to the inactive state eDRX cycle; or
in response to the UE being in an inactive state, configured with an idle state eDRX cycle greater than a first cycle and configured with an inactive state eDRX cycle greater than the first cycle, determining that the UE has the first eDRX cycle equal to a smaller one of the idle state eDRX cycle and the inactive state eDRX cycle.

In an embodiment, in response to the UE being in the inactive state, configured with the idle state eDRX cycle greater than the first cycle and configured with the inactive state eDRX cycle greater than the first cycle, the UE has the first eDRX cycle equal to the idle state eDRX cycle, and a measurement time of the UE falls within a PTW of the idle state eDRX cycle;
or,
in response to the UE being in the inactive state, configured with the idle state eDRX cycle greater than the first cycle and configured with the inactive state eDRX cycle greater than the first cycle, it is determined that the UE has the first eDRX cycle equal to the inactive state eDRX cycle, and a measurement time of the UE falls within a PTW of the inactive state eDRX cycle.

In an embodiment, in response to the UE being in the inactive state, configured with the idle state eDRX cycle greater than the first cycle and configured with the inactive state eDRX cycle greater than the first cycle, the UE has the first eDRX cycle equal to a smaller one of the idle state eDRX cycle and the inactive state eDRX cycle, and a measurement time of the UE falls within a smaller one of a PTW of the idle state eDRX cycle and a PTW of the inactive state eDRX cycle.

In an embodiment, the second determining module 620 is configured to determine, based on the relevant information indicating that the UE does not have the first eDRX cycle, the measurement time interval of the high-priority frequency is M*Nlayers, or to determine, based on the relevant information indicating that the UE has the first eDRX cycle, the measurement time interval of the high-priority frequency is a larger one of M*Nlayers and at least one first eDRX cycle.

M is any positive integer, and Nlayers is a total number of high-priority frequencies.

In an embodiment, the second determining module 620 is configured to determine, based on the relevant information indicating that the UE does not have the first eDRX cycle, the measurement duration for the UE to perform the cell selection is a predetermined value; or to determine, based on the relevant information indicating that the UE has the first eDRX cycle, the measurement duration for the UE to perform the cell selection is a larger one of a predetermined value and the first eDRX cycle.

In an embodiment, the second determining module 620 is configured to perform at least one of the following:
in response to the specified type of UE having the first eDRX cycle, determining and detecting, based on a number of carriers in the first carrier group, the measurement configuration of a neighboring cell corresponding to the carriers in the first carrier group;
in response to the specified type of UE having the first eDRX cycle not greater than a second cycle, determining, based on a number of carriers in the second carrier group and a relaxation coefficient, the measurement configuration of a neighboring cell corresponding to the carriers in the second carrier group; or
in response to the specified type of UE having the first eDRX cycle greater than a second cycle, and a signal measurement value of the serving cell of the UE meeting a preset condition, determining, based on a number of carriers in the second carrier group and a relaxation coefficient, the measurement configuration of a neighboring cell corresponding to the carriers in the second carrier group.

The relaxation coefficient is a positive integer greater than or equal to 2.

In an embodiment, the signal measurement value includes: a reference signal received power (RSRP) or a reference signal received quality (RSPQ).

Meeting of the preset condition includes:
a RSRP of the serving cell being not greater than a RSRP threshold;
   or,
a RSPQ of the serving cell being not greater than a RSRQ threshold.

Embodiments of the disclosure provide a communication device, including:
a memory, configured to store instructions executable by a processor; and
a processor, connected to the memory.

The processor is configured to implement the UE control method and/or information processing method according to any of above mentioned technical solutions.

The processor may include various types of storage media. The storage media is a non-temporary computer storage media, and may continuously memorize and store the information thereon after the communication device is powered off.

Here, the communication device may include an access device or a core network device.

The processor may be connected to the memory through a bus or the like for reading the executable program stored on the memory, such as, to perform at least one of the methods illustrated in FIGs. 3 to 5.

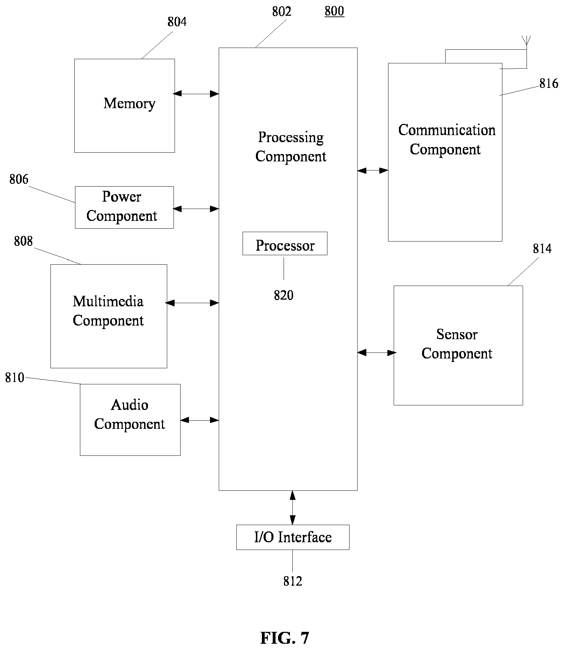

FIG. 7 is a block diagram illustrating a UE 800 according to an exemplary embodiment. For example, the UE 800 may be a mobile phone, a computer, a digital broadcast user device, a messaging sending and receiving equipment, a game console, a tablet, a medical device, a fitness device, a personal digital assistant, or the like.

As illustrated in FIG. 7, the UE 800 may include one or more of: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above-described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contraction data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 is configured to provide power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") for receiving an external audio signal when the UE 800 is in an operation mode, such as a call mode, a recording mode, and a speech recognition mode. The received audio signal may be further stored in the memory 804 or transmitted via the communication component 816. In some embodiments, the audio component 810 further includes a speaker to output audio signals.

The I/O interface 812 is configured to provide an interface between the processing component 802 and peripheral interface modules, such as a keyboard, a click wheel, buttons, and the like. The buttons may include, but be not limited to, a home button, a volume button, a starting button, and a locking button.

The sensor component 814 includes one or more sensors for providing status assessments of various aspects of the UE 800. For example, the sensor component 814 may detect an open/closed status of the UE 800, relative positioning of components, e.g., the display and the keypad of the UE 800, a change in position of the UE 800 or a component of the UE 800, a presence or absence of user contraction with the UE 800, an orientation or an acceleration/deceleration of the UE 800, and a change in temperature of the UE 800. The sensor component 814 may include a proximity sensor for detecting the presence of nearby objects without any physical contact. The sensor component 814 may also include a light sensor, such as a CMOS (complementary metal-oxide-semiconductor)) or a CCD (charge coupled device) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 may access a wireless network based on a communication standard, such as Wi-Fi, 2G, or 3G, or a combination thereof. In an exemplary embodiment, the communication component 816 receives a broadcast signal or broadcast associated information from an external broadcast management system via a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing any of the above methods.

In an exemplary embodiment, there is also provided a non-transitory computer readable storage medium including instructions, such as the memory 804 including the instructions. The instructions may be executed by the processor 820 in the UE 800 for performing any of the above methods. For example, the non-transitory computer readable storage medium may be a ROM, a RAM, a CD-ROM, a magnetic tape, a floppy disc, an optical data storage device, and the like.

Other implementations of the disclosure may be apparent to the skilled in the art from consideration of the specification and practice of the disclosure disclosed here. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

## Claims

1. A method for determining a measurement configuration, performed by a user equipment (UE), comprising:
determining relevant information of a first extended discontinuous reception (eDRX) cycle based on a non-connected state of the UE and an eDRX configuration of the UE; and
determining the measurement configuration of the UE based on the relevant information.

2. The method of claim 1, wherein the measurement configuration comprises at least one of:
a measurement time interval for the UE to measure a high-priority frequency; wherein, the high-priority frequency is a frequency with a priority higher than a frequency of a serving cell of the UE;
a measurement duration for the UE to perform a cell selection; or
a measurement parameter for radio resource management (RRM) measurement of a specified type of UE, wherein carriers to be measured of the specified type of UE comprise: a first carrier group and a second carrier group, the first carrier group is a carrier group for which the specified type of UE has a carrier measurement requirement the same as a non-specified type of UE, and the second performance carrier group is a carrier group to be measured for which a measurement requirement is lower than the measurement requirement for the first carrier group.

3. The method of claim 1 or 2, wherein determining the relevant information of the first eDRX cycle based on the non-connected state of the UE and the eDRX configuration of the UE comprises at least one of:
in response to the UE being in an idle state and configured with an idle state eDRX cycle, determining that the UE has the first eDRX cycle equal to the idle state eDRX cycle; or
in response to the UE being in an idle state and not configured with an idle state eDRX cycle, determining that the UE does not have the first eDRX cycle.

4. The method of claim 3, wherein, in response to the UE being in the idle state and configured with the idle state eDRX cycle, it is determined that the UE has the first eDRX cycle equal to the idle state eDRX cycle, the first eDRX cycle is greater than a first cycle, and a measurement time of the UE falls within a paging time window (PTW) of the idle state eDRX cycle.

5. The method of any of claims 1-4, wherein determining the relevant information of the first eDRX cycle based on the non-connected state of the UE and the eDRX configuration of the UE further comprises at least one of:
in response to the UE being in an inactive state, and configured with an idle state eDRX cycle not greater than a first cycle and not configured with an inactive state eDRX cycle, determining that the UE does not have the first eDRX cycle; or
in response to the UE being in an inactive state, and configured with an idle state eDRX cycle not greater than a first cycle and not configured with an inactive state eDRX cycle, determining that the UE has the first eDRX cycle equal to the idle state eDRX cycle.

6. The method of claim 4, wherein, in response to the UE being in an inactive state, and configured with an idle state eDRX cycle greater than the first cycle and not configured with an inactive state eDRX cycle, the UE has the first eDRX cycle equal to the idle state eDRX cycle, and the measurement time of the UE falls within the PTW defined by the idle state eDRX cycle.

7. The method of any of claims 1-6, wherein determining the relevant information of the first eDRX cycle based on the non-connected state of the UE and the eDRX configuration of the UE further comprises at least one of:
in response to the UE being in an inactive state, and configured with an idle state eDRX cycle not greater than a first cycle and an inactive state eDRX cycle not greater than the first cycle, determining that the UE has the first eDRX cycle equal to the inactive state eDRX cycle; or
in response to the UE being in an inactive state, and configured with an idle state eDRX cycle not greater than a first cycle and an inactive state eDRX cycle not greater than the first cycle, determining that the UE has the first eDRX cycle equal to a smaller one of the inactive state eDRX cycle and a non-idle state eDRX cycle.

8. The method of any of claims 1-7, wherein determining the relevant information of the first eDRX cycle based on the non-connected state of the UE and the eDRX configuration of the UE further comprises at least one of:
in response to the UE being in an inactive state, configured with an idle state eDRX cycle greater than a first cycle and not configured with an inactive state eDRX cycle, determining that the UE has the first eDRX cycle equal to the idle state eDRX cycle; or
in response to the UE being in an inactive state, configured with an idle state eDRX cycle greater than a first cycle and not configured with an inactive state eDRX cycle, determining that the UE does not have the eDRX cycle.

9. The method of claim 8, wherein, in response to the UE being in the inactive state, and configured with the idle state eDRX cycle greater than the first cycle and not configured with the inactive state eDRX cycle, the UE has the first eDRX cycle equal to the idle state eDRX cycle, a measurement time of the UE falls within a PTW defined by the idle state eDRX cycle.

10. The method of any of claims 1-9, wherein determining the relevant information of the first eDRX cycle based on the non-connected state of the UE and the eDRX configuration of the UE further comprises at least one of:
in response to the UE being in an inactive state, and configured with an idle state eDRX cycle greater than a first cycle and configured with an inactive state eDRX cycle not greater than the first cycle, determining that the UE has the first eDRX cycle equal to the idle state eDRX cycle; or
in response to the UE being in an inactive state, and configured with an idle state eDRX cycle greater than a first cycle and configured with an inactive state eDRX cycle not greater than the first cycle, determining that the UE has the first eDRX cycle equal to a smaller one of the inactive state eDRX cycle.

11. The method of claim 10, wherein in response to the UE being in the inactive state, configured with the idle state eDRX cycle greater than the first cycle and configured with the inactive state eDRX cycle not greater than the first cycle, it is determined that the UE has the first eDRX cycle equal to the idle state eDRX cycle, and a measurement time of the UE falls within a PTW of the idle state eDRX cycle.

12. The method of any of claims 1-11, wherein determining the relevant information of the first eDRX cycle based on the non-connected state of the UE and the eDRX configuration of the UE further comprises at least one of:
in response to the UE being in an inactive state, and configured with an idle state eDRX cycle greater than a first cycle and configured with an inactive state eDRX cycle greater than the first cycle, determining that the UE has the first eDRX cycle equal to the idle state eDRX cycle;
in response to the UE being in an inactive state, and configured with an idle state eDRX cycle greater than a first cycle and configured with an inactive state eDRX cycle greater than the first cycle, determining that the UE has the first eDRX cycle equal to the inactive state eDRX cycle; or
in response to the UE being in an inactive state, and configured with an idle state eDRX cycle greater than a first cycle and configured with an inactive state eDRX cycle greater than the first cycle, determining that the UE has the first eDRX cycle equal to a smaller one of the idle state eDRX cycle and the inactive state eDRX cycle.

13. The method of claim 12, wherein,
in response to the UE being in the inactive state, configured with the idle state eDRX cycle greater than the first cycle and configured with the inactive state eDRX cycle greater than the first cycle, the UE has the first eDRX cycle equal to the idle state eDRX cycle, and a measurement time of the UE falls within a PTW of the idle state eDRX cycle; or
in response to the UE being in the inactive state, configured with the idle state eDRX cycle greater than the first cycle and configured with the inactive state eDRX cycle greater than the first cycle, it is determined that the UE has the first eDRX cycle equal to the inactive state eDRX cycle, and a measurement time of the UE falls within a PTW of the inactive state eDRX cycle.

14. The method of claim 12, wherein in response to the UE being in the inactive state, configured with the idle state eDRX cycle greater than the first cycle and configured with the inactive state eDRX cycle greater than the first cycle, the UE has the first eDRX cycle equal to the smaller one of the idle state eDRX cycle and the inactive state eDRX cycle, and a measurement time of the UE falls within a smaller one of a PTW of the idle state eDRX cycle and a PTW of the inactive state eDRX cycle.

15. The method of any of claims 2-14, wherein determining the measurement configuration of the UE based on the relevant information comprises:
determining, based on the relevant information indicating that the UE does not have the first eDRX cycle, the measurement time interval of the high-priority frequency is M*Nlayers, or
determining, based on the relevant information indicating that the UE has the first eDRX cycle, the measurement time interval of the high-priority frequency is a larger one of M*Nlayers and at least one first eDRX cycle;
wherein, M is any positive integer, and Nlayers is a total number of high-priority frequencies.

16. The method of any of claims 2-15, wherein determining the measurement configuration of the UE based on the relevant information comprises:
determining, based on the relevant information indicating that the UE does not have the first eDRX cycle, the measurement duration for the UE to perform the cell selection is a predetermined value; or
determining, based on the relevant information indicating that the UE has the first eDRX cycle, the measurement duration for the UE to perform the cell selection is a larger one of a predetermined value and the first eDRX cycle.

17. The method of any of claims 2-9, wherein determining the measurement configuration of the UE based on the relevant information comprises at least one of:
in response to the specified type of UE having the first eDRX cycle, determining and detecting, based on a number of carriers in the first carrier group, the measurement configuration of a neighboring cell corresponding to the carriers in the first carrier group;
in response to the specified type of UE having the first eDRX cycle not greater than a second cycle, determining, based on a number of carriers in the second carrier group and a relaxation coefficient, the measurement configuration of a neighboring cell corresponding to the carriers in the second carrier group; or
in response to the specified type of UE having the first eDRX cycle greater than a second cycle, and a signal measurement value of the serving cell of the UE meeting a preset condition, determining, based on a number of carriers in the second carrier group and a relaxation coefficient, the measurement configuration of a neighboring cell corresponding to the carriers in the second carrier group;
wherein, the relaxation coefficient is a positive integer greater than or equal to 2.

18. The method of claim 17, wherein the signal measurement value comprises: a reference signal received power (RSRP) or a reference signal received quality (RSPQ); and
meeting the preset condition comprises:
a RSRP of the serving cell being not greater than a RSRP threshold; or
a RSPQ of the serving cell being not greater than a RSRQ threshold.

19. An apparatus for determining a measurement configuration, performed by a user equipment (UE), and comprising:
a first determining module, configured to determine relevant information of a first extended discontinuous reception (eDRX) cycle based on a non-connected state of the UE and an eDRX configuration of the UE; and
a second determining module, configured to determine the measurement configuration of the UE based on the relevant information.

20. A communication device, comprising a processor, a transceiver, a memory, and an executable program stored on the memory and executable by the processor, wherein, when the processor executes the executable program, the method for determining a measurement configuration according to any of claims 1-18 is implemented.

21. A computer storage medium, having an executable program stored thereon, wherein after the executable program is executed by a processor, the method for determining a measurement configuration according to any of claims 1-18 is implemented.
